# EUROPEAN PATENT SPECIFICATION

(11) **EP 2 495 128 B1**
(45) Date of publication and mention of the grant of the patent: **12.06.2019**
(21) Application number: 12157782.9
(22) Date of filing: 01.03.2012
(51) Int. Cl.: B60Q 1/14, F21S 41/17, F21S 41/698

(54) **LIGHT DISTRIBUTION CONTROL DEVICE**
VORRICHTUNG ZUR STEUERUNG DER LICHTSTREUUNG
DISPOSITIF DE CONTRÔLE DE DISTRIBUTION D'ÉCLAIRAGE

(30) Priority: 04.03.2011 JP 2011047135
(43) Date of publication of application: 05.09.2012
(73) Proprietor: Koito Manufacturing Co., Ltd., Tokyo 108-8711 (JP)
(72) Inventor: Osada, Naoki, Shizuoka-shi, Shizuoka (JP); Yamazaki, Masashi, Shizuoka-shi, Shizuoka (JP)
(74) Representative: Gill Jennings & Every LLP

(56) References cited:
- EP-A1- 2 266 838
- EP-A2- 2 279 908
- DE-A1-102005 017 933
- DE-A1-102009 023 093

## Description

### BACKGROUND

### Technical Field

The present disclosure relates to a light distribution control device for controlling the light distribution of the headlamps of a vehicle such as a car. In particular, the present disclosure relates to a light distribution control device which controls the light distribution so as to follow a front vehicle (i.e., a vehicle located in an area in front of the self vehicle).

### Related Art

Among light distribution control devices which increase the visibility of an area in front of the self vehicle being illuminated by its headlamps without glaring the driver of a preceding vehicle or an oncoming vehicle that is located in the area in front of the self vehicle is one that employs ADB (adaptive driving beam) control. In the ADB control, by illuminating the front area with a high-beam light distribution, a front vehicle such as a preceding vehicle or an oncoming vehicle is detected and a certain region is shielded from the illumination light if the driver of the detected front vehicle located in the certain region may be glared by the illumination light, whereby the visibility of an area in front of the self vehicle is increased through illumination of as wide an area as possible in front of the self vehicle without glaring the driver of the front vehicle. For example, in JP-A-2010-957, a vehicle in front of the self vehicle is detected, a light distribution pattern is formed by forming an additional light distribution over the cutoff line of a low-beam light distribution pattern of the headlamps of the self vehicle, and the light distribution cutoff line is controlled variably by swivel-controlling the light distribution pattern in the left-right direction so as to follow the detected front vehicle, whereby the visibility of an area in front of the self vehicle is increased without glaring the driver of the front vehicle.

In the above ADB control, the light distribution pattern is switched or light distribution swivel control is performed so as to follow a variation of the region where a front vehicle exists to prevent the driver of the front vehicle from being glared. Leveling control may also be performed which deflection-controls the light distribution in the vertical direction so as to follow a variation of the region where the front vehicle exists. When the light distribution pattern switching, the swivel control, and/or the leveling control is performed a small and fast variation of the region where a front vehicle exists, these kinds of control are performed frequently and the driver of the self vehicle may be annoyed by a variation in the illumination state in an area in front of the self vehicle. In particular, when plural vehicles exist in front of the self vehicle, the positions of the respective vehicles vary in a complicated manner and the regions where those vehicles exist also vary in a complicated manner. Therefore, the illumination state in an area in front of the self vehicle is varied faster in a complicated manner. If the follow-up speeds of the light distribution pattern switching, the swivel control, and/or the leveling control are lowered to solve this problem, these kinds of control may not be able to follow a fast variation of the regions where the front vehicles exist to glare their drivers.
DE 102009 023093 A1 discloses background art.
EP 2 266838 A1 discloses background art.
EP 2 279 908 A2 discloses background art.
DE 10 2005 017933 A1 discloses background art.

### SUMMARY OF THE INVENTION

One of illustrative aspects of the present invention is to provide a light distribution control device which can prevent glare of the driver of a front vehicle and prevent the driver of the self vehicle from being annoyed by frequent light distribution controls.

According to an aspect of the present invention, there is provided a light distribution control device (100) as set out in claim 1.

According to the present invention, the light distribution of headlamps is controlled so as to follow a variation of the position of a front vehicle, that is, a variation of a vehicle presence range, whereby the driver of the front vehicle is prevented from being glared. When a range end of a vehicle presence range moves to the side opposite to the side of the vehicle presence range (e.g., when the vehicle presence range expands), the control is performed so as to follow the variation of the vehicle presence range, whereby the driver of the front vehicle is prevented reliably from being glared. On the other hand, when a range end of a vehicle presence range moves to the side of the vehicle presence range (e.g., when the vehicle presence range shrinks), the control to cope with the variation of the vehicle presence range is substantially delayed. The light distribution control is substantially not performed in response to a small and fast variation of the vehicle position. As a result, whereas the driver of the front vehicle is prevented from being glared, the driver of the self vehicle is prevented from being annoyed by avoiding frequent light distribution switching.

### BRIEF DESCRIPTION OF THE DRAWINGS

Fig. 1 is a conceptual diagram showing the configuration of a light distribution control device according to an embodiment of the present invention;
Fig. 2 shows the configuration of a headlamp used in the embodiment;
Fig. 3 illustrates a list of light distribution patterns formed by a left headlamp and a right headlamp;
Figs. 4A and 4B illustrate vehicle presence ranges;
Figs. 5A and 5B are schematic diagrams illustrating example light distribution controls; and
Figs. 6A-6D are time charts showing a detection signal of a range end of a vehicle presence range, its peak hold output signal, and a swivel control direction.

### DETAILED DESCRIPTION

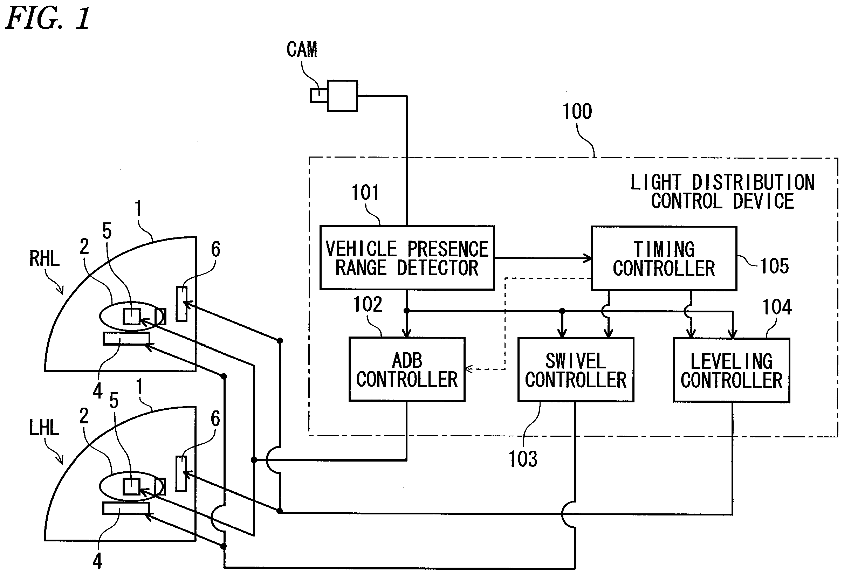

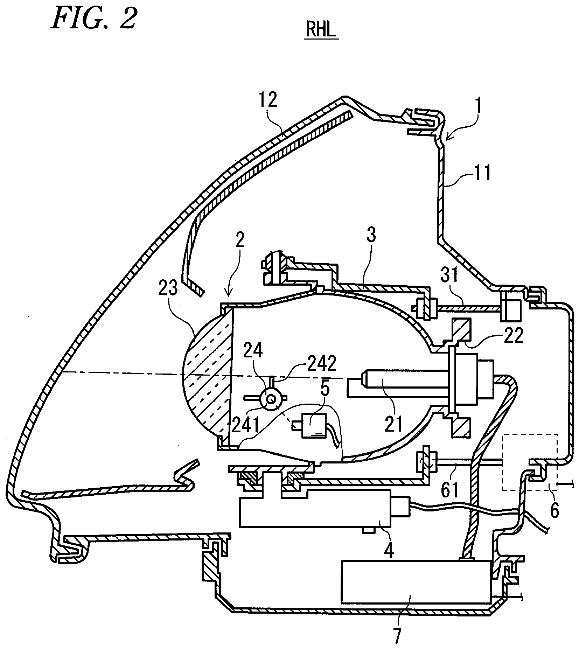

An embodiment of the present invention will be hereinafter described with reference to the drawings. Fig. 1 is a conceptual diagram showing the configuration of a light distribution control device for headlamps of a car. The front portion of the car is provided with a left headlamp LHL and a right headlamp RHL, and the light distribution of each of the headlamps LHL and RHL is controlled by the light distribution control device 100. The headlamps LHL and RHL have basically the same configuration. For example, as shown in Fig. 2, in the right headlamp RHL, a projector-type lamp unit 2 is mounted in a lamp housing 1 which is composed of a lamp body 11 and a transparent front cover 12. Although not described in detail, the lamp unit 2 is equipped with a light source 21 which is a discharge bulb, a spheroidal reflector 22, a projection lens 23 disposed in front of the reflector 22, and a variable shade 24 for forming a light distribution pattern of light that is projected by the projection lens 23.

The lamp unit 2 is supported by a bracket 3 which is disposed in the lamp housing 1, and is configured so as to be swivel-controlled in the left-right direction by a swivel actuator 4, that is, so that its illumination direction can be deflected in the left-right direction. The bracket 3 is supported by the lamp housing 1 at plural locations via aiming bolts 31, and part of the bracket 3 is connected to a leveling rod 61 of a leveling actuator 6. The bracket 3 is inclined in the vertical direction by driving the leveling actuator 6, whereby the optical axis of the lamp unit 2 is deflected in the vertical direction. The variable shade 24 is configured in such a manner that plural light shield plates 242 having different shapes are attached to the circumferential surface of a cylindrical main shaft 241. The rotational position of the variable shade 24 around the axis is varied by a shade actuator 5. The light shield plate 242 located on the lamp optical axis is switched by varying the rotational position of the variable shade 24, whereby the light distribution pattern of light projected by the lamp unit 2 is varied. The discharge bulb 21 is electrically connected to a discharge circuit unit 7.

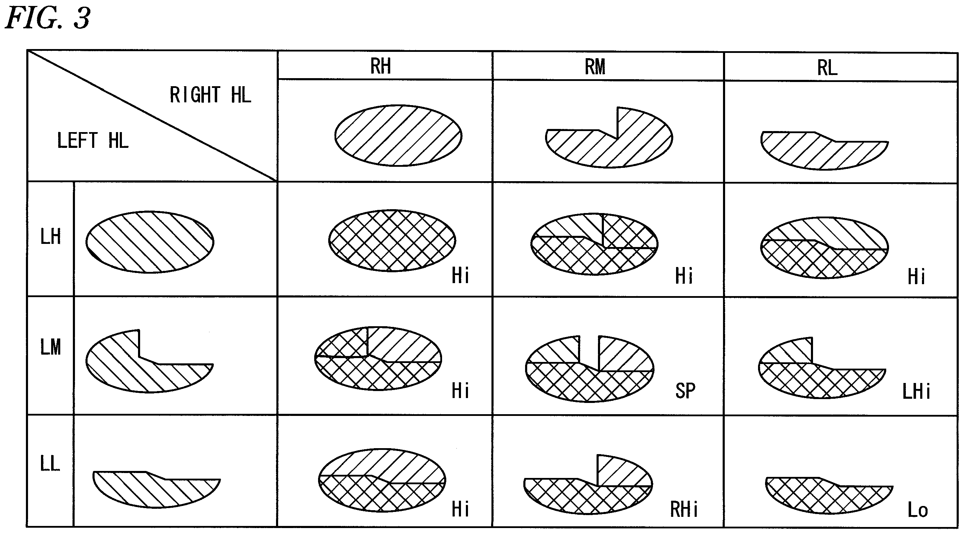

Fig. 3 shows light distribution patterns of each of the left headlamp LHL and the right headlamp RHL which are formed by controlling the variable shade 24 and total light distribution patterns each of which is formed by superimposing light distribution patterns of the two headlamps LHL and RHL on each other. The light distribution patterns formed by the right headlamp RHL (see the top row of Fig. 3) are as follows. When the variable shade 24 is located at a first rotational position, a high-beam light distribution pattern RH having no cutoff line is formed. When the variable shade 24 is located at a third rotational position, a low-beam light distribution pattern RL having a cutoff line is formed. When the variable shade 24 is located at a second rotational position, a light distribution pattern RM (called a right-side high-beam light distribution pattern) is formed whose right-side pattern is a partial high-beam light distribution pattern and left-side pattern is a partial low-beam light distribution pattern. As for the left headlamp LHL, as shown in the leftmost column of Fig. 3, a high-beam light distribution pattern LH, a low-beam light distribution pattern LL, and a left-side high-beam light distribution pattern LM are likewise formed when the variable shade 24 is located at the respective rotational positions. As shown in Fig. 3, when light distribution patterns of the two headlamps LHL and RHL are superimposed on each other, a high-beam light distribution pattern Hi, a low-beam light distribution pattern Lo, a right-side high-beam light distribution pattern RHi, a left-side high-beam light distribution pattern LHi, or a split light distribution pattern SP is formed as a total light distribution pattern. The split light distribution pattern SP which has a central recessed non-illumination region is formed when the right-side high-beam light distribution pattern RM and the left-side high-beam light distribution pattern LM are superimposed on each other. Plural high-beam light distribution patterns Hi having different luminance distributions are formed when different sets of light distribution patterns of the left headlamp LHL and the right headlamp RHL are superimposed on each other.

Again referring to Fig. 1, the light distribution control device 100 is equipped with a vehicle presence range detector 101 for detecting a range where a front vehicle (i.e., another vehicle existing on a road ahead) exists, an ADB controller 102 for determining light distribution patterns to be formed by the left headlamp LHL and the right headlamp RHL of the self vehicle based on the detected vehicle presence range, a swivel controller 103 for controlling the respective swivel actuators 4 of the headlamps LHL and RHL of the self vehicle based on the detected vehicle presence range, and a leveling controller 104 for controlling the respective leveling actuators 6 of the headlamps LHL and RHL of the self vehicle based on the detected vehicle presence range. The light distribution control device 100 is also equipped with a timing controller 105 for recognizing a variation of the vehicle presence range based on vehicle presence range detection signals that are output from the vehicle presence range detector 101 and controlling the control timing of the swivel controller 103 and the leveling controller 104 according to the recognized variation.

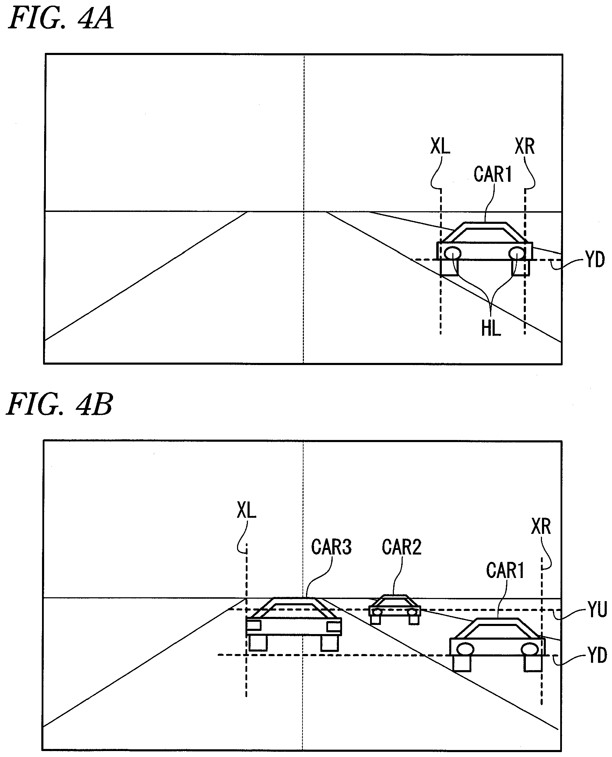

A camera CAM for capturing an image of an area in front of the self vehicle is connected to the vehicle presence range detector 101. The vehicle presence range detector 101 detects a front vehicle based on an image taken by the camera CAM. There are various methods for detecting a front vehicle. One method is to use positions of lit lamps (e.g., headlamps or tail lamps) located at the left end and the right end of a vehicle in an image taken. For example, as shown in Fig. 4A, in the case where an image includes a single oncoming vehicle CAR1, left and right lit headlamps HL of the oncoming vehicle CAR1 are detected. The right end lit position of the detected lit right headlamp HL and the left end lit position of the detected lit left headlamp HL are detected as a right range end XR and a left range end XL, respectively, and the range delimited by the right range end XR and the left range end XL is defined as a vehicle presence range in the left-right direction. As shown in Fig. 4B, in the case where an image includes plural front vehicles such as oncoming vehicles CAR1 and CAR2 and a vehicle CAR3 ahead, the left end lit position of the leftmost vehicle CAR3 is detected as a left range end XL and the right end lit position of the rightmost vehicle CAR1 is detected as a right range end XR. The range delimited by the left range end XL and the right range end XR is defined as a left-right vehicle presence range.

In the vertical direction, in the case of the image that includes the single oncoming vehicle CAR1, as shown in Fig. 4A, the bottom lit positions of the lit right headlamp HL and the lit left headlamp HL are detected as a bottom range end YD. In the case of the image that includes the plural vehicles, as shown in Fig. 4B, the top lit positions of the uppermost vehicle CAR2 are detected as a top range end YU and the bottom lit positions of the lowermost vehicle CAR1 are detected as a bottom range end YD. The range delimited by the top range end YU and the bottom range end YD is defined as a vertical vehicle presence range. The vehicle presence range detector 101 is configured so that the signal level of a corresponding detection signal is increased when any of the right range end XR, the left range end XL, and the bottom range end YD of the detected vehicle presence ranges is varied in such a direction that the corresponding vehicle presence range expands. That is, the vehicle presence range detector 101 is configured so that the signal level of a corresponding detection signal is increased when the right range end XR moves rightward, the left range end XL moves leftward, or the bottom range end YD moves downward.

The ADB controller 102 can switch between the light distribution patterns RH, RL, and RM of the right headlamp RHL and between the light distribution patterns LH, LL, LM of the left headlamp LHL (see Fig. 3) by independently controlling the shade actuators 5 of the variable shades 24 of the right headlamp RHL and the left head lamp LHL based on a vehicle presence range detected by the vehicle presence range detector 101. Thus, the total light distribution pattern of the two headlamps LHL and RHL can be controlled so as to become one of the high-beam light distribution patterns Hi, the low-beam light distribution pattern Lo, the right-side high-beam light distribution pattern RHi, the left-side high-beam light distribution pattern LHi, and the split light distribution pattern SP as a result of superimposition of selected light distribution patterns of the two headlamps LHL and RHL

The swivel controller 103 deflection-controls the lamp units 2 of the headlamps LHL and RHL in the left-right direction by driving the swivel actuators 4 of the headlamps LHL and RHL based on detection signals that are output from the vehicle presence range detector 101, that is, based on a vehicle presence range. The swivel controller 103 deflection-controls the optical axes of the headlamps LHL and RHL independently in the left-right direction so that the driver of a front vehicle is not glared with light distribution patterns of the headlamps LHL and RHL set by the ADB controller 102, in other words, the vehicle presence range is not illuminated with either of the light distribution patterns of the headlamps LHL and RHL

Likewise, the leveling controller 104 deflection-controls the lamp units 2 of the headlamps LHL and RHL in the vertical direction by driving the leveling actuators 6 of the headlamps LHL and RHL based on a vehicle presence range detected by the vehicle presence range detector 101. The leveling controller 104 deflection-controls the optical axes of the headlamps LHL and RHL independently in the vertical direction so that the driver of a front vehicle is not glared with light distribution patterns of the headlamps LHL and RHL set by the ADB controller 102, that is, the vehicle presence range is not illuminated with either of the light distribution patterns of the headlamps LHL and RHL. An actual light distribution pattern of the headlamps LHL and RHL is set so that a region under a cutoff line is illuminated. Therefore, the leveling controller 104 performs a leveling control so that the cutoff line is located under a vehicle presence range.

The timing controller 105 receives vehicle presence range detection signals that are output from the vehicle presence range detector 101 (in this example, detection signals of a right range end XR, a left range end XL, and a bottom range end YD of vehicle presence ranges). In this example, the timing controller 105 does not receive a detection signal of a top range end YU of the vertical vehicle presence range because it is not required for the light distribution control. Although not shown in any drawings, the timing controller 105 is equipped with peak hold circuits whose hold time is set at a prescribed time. Thus, the timing controller 105 performs peak hold processing on the signal levels of the received detection signals, and outputs thus-held signal levels to the swivel controller 103 and the leveling controller 104 as control signals, respectively. The hold time of the peak hold circuits is set at 500 ms, that is, the peak hold circuits hold peak levels of the detection signals for this hold time. The hold time can be set arbitrarily, and may be varied according to a vehicle speed variation of the self vehicle.

How the above-configured light distribution control device 100 according to the embodiment operates will be described below. The vehicle presence range detector 101 detects the right end lit position of a lit right headlamp and the left end lit position of a lit left headlamp, and detects a vehicle presence range in the left-right direction from the right end lit position and the left end lit position. Where only one front vehicle exists, as shown in Fig. 4A, the right end lit position and the left end lit position are employed as a right range end XR and a left range end XL, respectively, and the range delimited by the right range end XR and the left range end XL is employed as a vehicle presence range in the left-right direction. The bottom lit positions of the lit right headlamp and the lit left headlamp are employed as a bottom range end YD

Where plural front vehicles exist, as shown in Fig. 4B, the right end lit positions of the rightmost vehicle among all the vehicles is employed as a right range end XR and the left end lit positions of the leftmost vehicle are employed as a left range end XL. The range delimited by the left range end XL and the right range end XR is employed as a left-right vehicle presence range. In the vertical direction, the top lit positions of the uppermost vehicle are employed as a top range end YU and the bottom lit positions of the lowermost vehicle are employed as a bottom range end YD. The range delimited by the top range end YU and the bottom range end YD is employed as a vertical vehicle presence range. In the embodiment, the top range end YU is not used actually because the light distribution is controlled so that the region over the bottom range end YD is shielded.

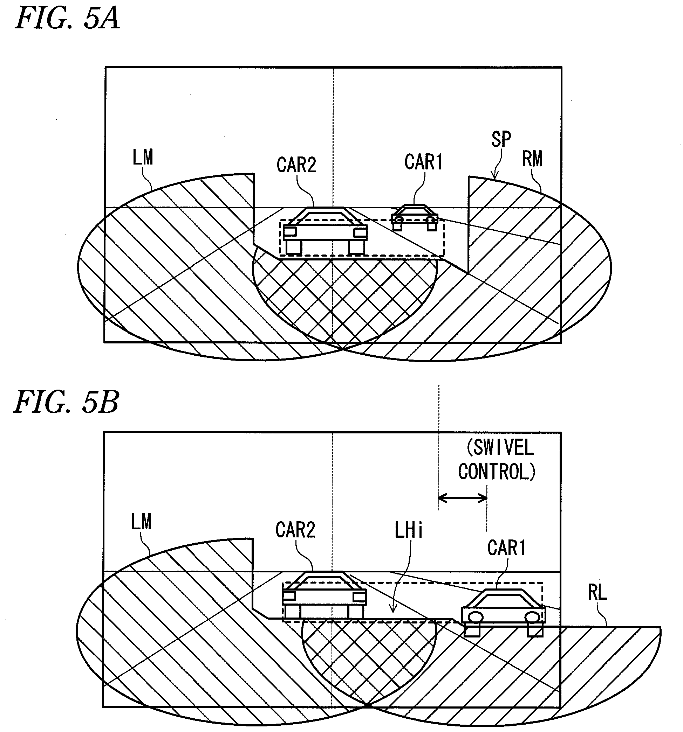

The ADB controller 103 controls the light distribution patterns of the left headlamp LHL and the right headlamp RHL according to a detected vehicle presence range(s). A description will be made of an example in which as shown in Fig. 5A an oncoming vehicle CAR1 and a vehicle CAR2 ahead exist. If the vehicles CAR1 and CAR2 are detected at positions that are in the vicinities of the line of the directly forward direction of the self vehicle, the light distribution patterns of the left headlamp LHL and the right headlamp RHL are set to the left-side high-beam light distribution pattern LM and the right-side high-beam light distribution pattern RM, respectively. As a result, the total light distribution pattern which is formed through superimposition of the light distribution patterns of the headlamps LHL and RHL is controlled to the split light distribution pattern SP having a central shielded region.

On the other hand, if as shown in Fig. 5B a vehicle is detected that is deviated leftward or rightward, the light distribution pattern of at least one of the headlamps LHL and RHL is set to the low-beam light distribution pattern LL or RL. In this example, when the oncoming vehicle CAR1 has come close to the self vehicle and is detected at a position that is distant from the self vehicle to the right, the light distribution pattern of the left headlamp LHL is kept as it is (left-side high-beam light distribution pattern LM) and the light distribution pattern of the right headlamp RHL is switched to the low-beam light distribution pattern RL. As a result, the total light distribution pattern of the headlamps LHL and RHL is controlled to the left-side high-beam light distribution pattern LHi, whereby high visibility is secured in a left-side region whereas the driver of the oncoming vehicle CAR1 which is located on the right side is prevented from being glared. Alternatively, the light distribution patterns of the two headlamps LHL and RHL may be made the low-beam light distribution patterns LL and RL, respectively. Although not shown in any drawings, if a vehicle is detected that is deviated leftward, a light distribution control that is left/right-opposite to the above-described one is performed.

The swivel controller 104 recognizes light distribution patterns set by the ADB controller 102 and a vehicle presence range(s) detected by the vehicle presence range detector 101 and swivel-controls the lamp units 2 of the left headlamp LHL and the right headlamp RHL so that the vehicle presence range(s) is not illuminated with a resulting total light distribution pattern. For example, in the example of Fig. 5B in which the ADB controller 102 switches the light distribution pattern of the right headlamp RHL from the right-side high-beam light distribution pattern RM to the low-beam light distribution pattern RL, at the same time the swivel controller 103 swivel-controls the optical axis of the right headlamp RHL rightward so as to follow the oncoming vehicle CAR1. As a result, the light distribution control is performed so that the vehicle presence ranges are not illuminated. When the self vehicle and the oncoming vehicle CAR1 have passed each other and the oncoming vehicle CAR1 has disappeared from the road ahead, the ADB controller 102 keeps the light distribution pattern of the right headlamp RHL as it is (low-beam light distribution pattern RL) or switches it to the right-side high-beam light distribution pattern RM and the swivel controller 103 swivel-controls the optical axis of the right headlamp RHL leftward to return it to the direction of Fig. 5A.

Although not performed in the above example, the leveling controller 104 deflection-controls the optical axes of the left headlamp LHL and the right headlamp RHL according to a variation of the position of a front vehicle so that the vehicle presence range(s) is not illuminated. As a result, the visibility of an area in front of the self vehicle can be increased by illuminating regions on both sides of the vehicle presence range(s) and a region under it whereas the drivers of front vehicles existing in the vehicle presence range(s) are prevented from being glared by expanding a shielded region for them.

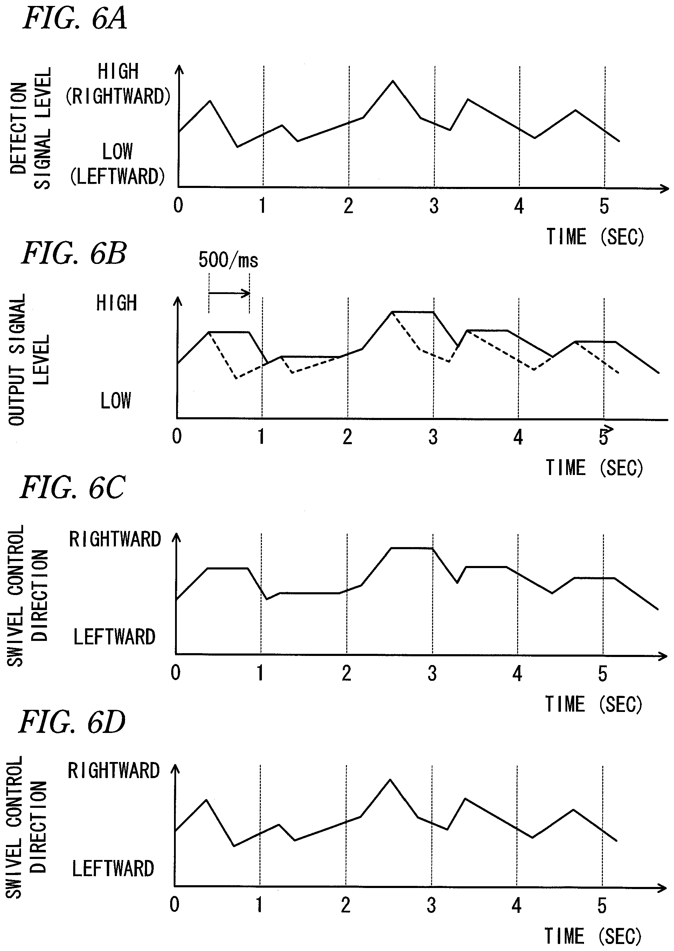

In the above-described swivel control and leveling control of the swivel controller 103 and the leveling controller 104, the followability is controlled according to the manner of variation of a vehicle presence range detected by the vehicle presence range detector 101, that is, whether a range end of the vehicle presence range moves to the side of the vehicle presence range or to the side opposite to it. Fig. 6A shows an example detection signal of a right range end that is output from the vehicle presence range detector 101 (in this example, an example detection signal of the right range end XR shown in Fig. 4B). For example, when the right range end XR is moved as the vehicle presence range is varied, the signal level of detection signal of the right range end XR is varied accordingly. In this example, as mentioned above, the signal level is increased when the right range end XR is moved rightward, that is, to the side opposite to the side of the vehicle presence range. Since the detection signal is peak-held by the peak hold circuit of the timing controller 105, even if the signal level of the detection signal lowers (indicated by a broken line in Fig. 6B), the signal level immediately before the signal level reduction is held for the hold time of 500 ms (indicated by a solid line in Fig. 6B). That is, when a vehicle presence range expands and a right range end XR moves rightward, the signal level of the detection signal is increased and the output signal level is also increased accordingly. On the other hand, when a vehicle presence range shrinks and a right range end XR moves leftward, the signal level of the detection signal is lowered but peak-held for the hold time by the peak hold circuit. The output signal level is lowered after a lapse of the hold time. In other words, the signal level of the detection signal is output after a delay. The same applies to detection signals of a left range end and a bottom range end. Whereas the output signal level quickly follows the signal level of a detection signal when a vehicle presence range expands, the signal level of the detection signal is delayed when a vehicle presence range shrinks.

Fig. 6C shows an optical axis swivel control direction. When the position of the front vehicle moves rightward and the right range end XR of the vehicle presence range moves rightward (i.e., the vehicle presence range expands), the signal level of the detection signal is increased and the signal level that is output from the timing controller 105 to the swivel controller 103 is increased following it quickly. The swivel controller 103 immediately starts to swivel-control the right headlamp RHL rightward to deflect the right-side high-beam light distribution pattern RM rightward. As a result, the driver of the vehicle that has moved rightward is prevented from being glared. On the other hand, when the position of the front vehicle moves leftward and the right range end XR of the vehicle presence range moves leftward (i.e., the vehicle presence range shrinks), the signal level of the detection signal of the right range end XR is lowered but peak-held by the peak hold circuit for the hold time. The signal level that is output from the timing controller 105 to the swivel controller 103 is lowered after a delay of the hold time. As a result, the swivel controller 103 starts to swivel-control the right headlamp RHL leftward after a delay of the same time to deflect the right-side high-beam light distribution pattern RM leftward.

Therefore, when starting from the state of Fig. 5B the self vehicle and the oncoming vehicle CAR1 have passed each other and the oncoming vehicle CAR1 has come not to be detected, the swivel control of returning the light distribution pattern of the right headlamp RHL leftward is delayed. If a next oncoming vehicle CAR1 is detected immediately thereafter as shown in Fig. 5A and then a state as shown in Fig. 5B occurs again, the light distribution pattern of the right headlamp RHL is kept deflected rightward (i.e., it is not deflected leftward). In this manner, the right headlamp RHL is prevented from being swivel-controlled in the left-right direction and hence the driver of the self vehicle is prevented from being annoyed.

If the timing controller 105 were not equipped with the peak hold circuit, as shown in Fig. 6D the signal level that is output from the timing controller 105 would vary following a variation of the signal level of a detection signal of the eight range end XR and hence the right headlamp RHL would be deflection-controlled in the left-right direction according to a movement of the front vehicle in the left-right direction. The driver of the self vehicle would be annoyed though the driver of the front vehicle could be prevented from being glared.

The above-described operation concept also applies to a case that a front vehicle moves leftward and a left range end XL of a vehicle presence range moves leftward. The driver of the front vehicle could be prevented from being glared by swivel-controlling the left headlamp LHL leftward so as to follow such a movement. On the other hand, if the front vehicle moves rightward and the left range end XL of the vehicle presence range moves rightward, the peak hold circuit disables a rightward swivel control, whereby the driver of the self vehicle is prevented from being annoyed.

Furthermore, the above-described operation concept also applies to a case that a front vehicle moves downward and a bottom range end YD of a vehicle presence range moves downward. The driver of the front vehicle could be prevented from being glared by leveling-controlling the left headlamp LHL and the right headlamp RHL downward so as to follow such a movement. On the other hand, if the front vehicle moves upward and the bottom range end YD of the vehicle presence range moves upward, the peak hold circuit disables an upward leveling control, whereby the driver of the self vehicle is prevented from being annoyed.

As described above, when a vehicle presence range of a front vehicle expands in swivel-controlling or leveling-controlling the light distribution of the headlamps, the control is performed so as to follow the variation of the vehicle presence range, whereby the driver of the front vehicle is prevented reliably from being glared. On the other hand, when a vehicle presence range of a front vehicle shrinks, the control to cope with the variation of the vehicle presence range is substantially delayed by the signal level peak hold action of the peak hold circuit. The light distribution control is not performed in response to a small and fast variation of the vehicle position. As a result, whereas the driver of the front vehicle is prevented from being glared, the driver of the self vehicle is prevented from being annoyed by avoiding frequent light distribution switching.

In the embodiment, the timing controller 105 is provided separately from the vehicle presence range detector 101, and timing control is performed by peak-holding a detection signal of a range end that is output from the vehicle presence range detector 101 by the peak hold circuit of the timing controller 105. Alternatively, such a peak hold circuit may be incorporated in the vehicle presence range detector 101 and peak-holds a detection signal of a range end that is generated in the vehicle presence range detector 101. In this case, a resulting light distribution control device is not provided with the independent timing controller 105 used in the embodiment.

In the embodiment, the light distribution cutoff line is follow-up-controlled according to a variation of the position of a front vehicle, that is, the light distribution is swivel-controlled in the left-right direction or leveling-controlled in the vertical direction. The invention can also be applied to a light distribution control device in which the light distribution cutoff line is substantially follow-up-controlled according to a variation of a vehicle presence range by switching the light distribution patterns of the left headlamp LHL and the right headlamp RHL so as to follow a variation of the position of a front vehicle by the ADB controller 102 (indicated by a broken-line arrow in Fig. 1). In this case, the ADB controller 102 is controlled based on a detection signal as controlled by the timing controller 105 or a detection signal that is output from the vehicle presence range detector 101 and then substantially timing-controlled in the above-described manner.

The invention can be applied to a light distribution control device which switches the light distribution pattern according to a variation of the position of a front vehicle or controls the light distribution cutoff line so as to follow a front vehicle by swivel control and/or leveling control.

While aspects of embodiments of the present invention have been shown and described above, other implementations are within the scope of the claims. It will be understood by those skilled in the art that various changes in form and details may be made therein without departing from the scope of the invention as defined by the appended claims.

## Claims

1. A light distribution control device (100) for controlling a light distribution pattern (SP) which is formed by light emitted from a headlamp system of a vehicle comprising a right headlamp, called in the following RHL, and a left headlamp, called in the following LHL, the device comprising:
a vehicle presence range detector (101) configured to detect a vehicle presence range in which a front vehicle (CAR 1) exists in front of the vehicle, wherein the vehicle presence range is defined by a right range end (XR) and a left range end (XL) in a vehicle left-right direction;
a light distribution controller (102) configured to determine the light distribution pattern based on the vehicle presence range so as to prevent the vehicle presence range from being illuminated with glare light, wherein a non-illuminated area of the light distribution pattern covering the vehicle presence range is defined by at least one of a right end lit position and a left end lit position;
a swivel controller (104) configured to control swiveling of the vehicle headlamps; and
a timing controller (105) configured to control a swiveling timing of the swivel controller, (104), depending on the detected vehicle presence range,
**characterized in that** :
- for the RHL, when the right range end (XR) moves leftwards the timing controller (105) controls the swiveling timing of the swivel controller (104) such that commencing swiveling of the RHL is delayed
- for the LHL, when the left range end (XL) moves rightwards the timing controller (105) controls the swiveling timing of the swivel controller (104) such that commencing swiveling of the LHL is delayed
and further **characterized by** one or both of:
(i) when the right range end moves rightwards:
- in the case that the right range end (XR) has been moving leftwards just before, the delayed swiveling of the RHL to the left continues as long as it is necessary to close the gap between the right end lit position and the right range end (XR); and
- the commencing of the swiveling to the right of the RHL is not delayed and starts as soon as the right end range (XR) reaches the right end lit position;
(ii) when the left range end (XL) moves leftwards:
- in the case that the left range end (XL) has been moving rightwards just before, the delayed swiveling of the LHL to the right continues as long as it is necessary to close the gap between the left end lit position and the left range end (XL); and
- the commencing of the swiveling to the left of the LHL is not delayed and starts as soon as the left end range reaches the left end lit position.

2. The device of any preceding claim, wherein the left range end (XL) is a position of the left headlamp of the front vehicle, and the right range end (XR) is a position of the right headlamp of the front vehicle.

3. The device of any preceding claim, further comprising:
a leveling controller (104) configured to control leveling of the vehicle headlamp.

4. The device of any preceding claim, wherein the timing controller (105) is configured to control a swiveling timing of the swivel controller (104) by providing a control signal to the swivel controller, wherein a signal level of the control signal is changed depending on the change of the vehicle presence range.

5. The device of any preceding claim, wherein
the vehicle presence range detector (101) is configured to obtain an image of a front region captured by a camera device, and determine the vehicle presence
range based on lamps of the front vehicle in the captured image.

## Patentansprüche

1. Lichtverteilungs-Steuervorrichtung (100) zum Steuern eines Lichtverteilungsmusters (SP), das durch Licht gebildet wird, das von einem Scheinwerfersystem eines Fahrzeugs emittiert wird, das einen rechten Scheinwerfer, nachfolgend als RHL bezeichnet, und einen linken Scheinwerfer, nachfolgend als LHL bezeichnet, umfasst, wobei die Vorrichtung umfasst:
einen Fahrzeugpräsenzbereichsdetektor (101), der konfiguriert ist zum Erfassen eines Fahrzeugpräsenzbereichs, in dem ein vorausfahrendes Fahrzeug (CAR 1) vor dem Fahrzeug vorhanden ist, wobei der Fahrzeugpräsenzbereich durch ein rechtes Bereichsende (XR) und ein linkes Bereichsende (XL) in einer Links-Rechts-Richtung des Fahrzeugs definiert wird,
eine Lichtverteilungs-Steuereinrichtung (102), die konfiguriert ist zum Bestimmen des Lichtverteilungsmusters basierend auf dem Fahrzeugpräsenzbereich, um zu verhindern, dass der Fahrzeugpräsenzbereich mit einem blendenden Licht beleuchtet wird, wobei ein nicht-beleuchteter Bereich des Lichtverteilungsmusters, der den Fahrzeugpräsenzbereich abdeckt, durch eine rechte Endbeleuchtungsposition und eine linke Endbeleuchtungsposition definiert wird,
eine Schwenksteuereinrichtung (104), die konfiguriert ist zum Steuern eines Schwenkens der Fahrzeugscheinwerfer, und
eine Timing-Steuereinrichtung (105), die konfiguriert ist zum Steuern eines Schwenktimings der Schwenksteuereinrichtung (104) in Abhängigkeit von dem erfassten Fahrzeugpräsenzbereich,
**dadurch gekennzeichnet, dass**:
- für den RHL, wenn sich das rechte Bereichsende (XR) nach links bewegt, die Timing-Steuereinrichtung (105) das Schwenktiming der Schwenksteuereinrichtung (104) derart steuert, dass der Beginn des Schwenkens des RHL verzögert wird,
- für den LHL, wenn sich das linke Bereichsende (XL) nach rechts bewegt, die Timing-Steuereinrichtung (105) das Schwenktiming der Schwenksteuereinrichtung (104) derart steuert, dass der Beginn des Schwenkens des LHL verzögert wird,
und weiterhin **gekennzeichnet durch** eines der Folgenden:
(i) wenn sich das rechte Bereichsende nach rechts bewegt:
- für den Fall, dass sich das rechte Bereichsende (XR) direkt zuvor nach links bewegt hat, das verzögerte Schwenken des RHL nach links so lange fortgesetzt wird, wie es für das Schließen des Abstands zwischen der rechten Endbeleuchtungsposition und dem rechten Bereichsende (XR) erforderlich ist, und
- der Beginn des Schwenkens nach rechts des RHL nicht verzögert wird und beginnt, sobald der rechte Endbereich (XR) die rechte Endbeleuchtungsposition erreicht,
(ii) wenn sich das linke Ende (XL) nach links bewegt:
- für den Fall, dass sich das linke Bereichsende (XL) direkt zuvor nach rechts bewegt hat, das verzögerte Schwenken des LHL nach rechts so lange fortgesetzt wird, wie es für das Schließen des Abstands zwischen der linken Endbeleuchtungsposition und dem linken Bereichsende (XL) erforderlich ist, und
- der Beginn des Schwenkens nach links des LHL nicht verzögert wird und beginnt, sobald der linke Endbereich (XL) die linke Endbeleuchtungsposition erreicht.

2. Vorrichtung nach Anspruch 1, wobei das linke Bereichsende (XL) eine Position des linken Scheinwerfers des vorausfahrenden Fahrzeugs ist und das rechte Bereichsende (XR) eine Position des rechten Scheinwerfers des vorausfahrenden Fahrzeugs ist.

3. Vorrichtung nach einem der vorstehenden Ansprüche, die weiterhin umfasst:
eine Höhenverstellungssteuereinrichtung (104), die konfiguriert ist zum Steuern einer Höhenverstellung des Fahrzeugscheinwerfers.

4. Vorrichtung nach einem der vorstehenden Ansprüche, wobei die Timing-Steuereinrichtung (105) konfiguriert ist zum Steuern des Schwenk-Timings der Schwenksteuereinrichtung (104) durch das Ausgeben eines Steuersignals zu der Schwenksteuereinrichtung, wobei der Signalpegel des Steuersignals in Abhängigkeit von einer Änderung des Fahrzeugpräsenzbereichs geändert wird.

5. Vorrichtung nach einem der vorstehenden Ansprüche, wobei:
der Fahrzeugpräsenzbereichsdetektor (101) konfiguriert ist zum Erhalten eines Bilds eines vorderen Bereichs, das durch eine Kameraeinrichtung aufgenommen wird, und zum Bestimmen des Fahrzeugpräsenzbereichs basierend auf Leuchten des vorausfahrenden Fahrzeugs in dem erfassten Bild.

## Revendications

1. Dispositif de commande de répartition de lumière (100) permettant de commander un schéma de répartition de lumière (SP) qui est formé par la lumière émise par un système de phares d'un véhicule comprenant un phare droit, dénommé RHL dans ce qui suit, et un phare gauche, dénommé LHL dans ce qui suit, le dispositif comprenant :
un détecteur de zone de présence (101) conçu pour détecter une zone de présence de véhicule dans laquelle un véhicule avant (VOITURE 1) est présent à l'avant du véhicule, dans lequel la zone de présence de véhicule est définie par une extrémité droite de zone (XR) et une extrémité gauche de zone (XL) dans une direction gauche-droite de véhicule ;
un dispositif de commande de répartition de lumière (102) conçu pour déterminer le schéma de répartition de lumière, sur la base de la zone de présence de véhicule, de manière à éviter que la zone de présence de véhicule ne soit éclairée par une lumière éblouissante, dans lequel une aire non éclairée du schéma de répartition de lumière couvrant la zone de présence de véhicule est définie par une position allumée d'extrémité droite et une position allumée d'extrémité gauche ;
un dispositif de commande de pivotement (104) conçu pour commander un pivotement des phares du véhicule ; et
un dispositif de commande de temporisation (105) conçu pour commander une temporisation de pivotement du dispositif de commande de pivotement (104), en fonction de la zone de présence de véhicule détectée,
**caractérisé en ce que** :
- pour le phare RHL, lorsque l'extrémité droite de zone (XR) se déplace vers la gauche, le dispositif de commande de temporisation (105) commande la temporisation de pivotement du dispositif de commande de pivotement (104) de manière à retarder le commencement du pivotement du phare RHL
- pour le phare LHL, lorsque l'extrémité gauche de zone (XL) se déplace vers la droite, le dispositif de commande de temporisation (105) commande la temporisation de pivotement du dispositif de commande de pivotement (104) de manière à retarder le commencement du pivotement du phare LHL
et **caractérisé en outre en ce que** :
(i) lorsque l'extrémité droite de zone se déplace vers la droite :
- dans le cas où l'extrémité droite de zone (XR) s'est déplacée juste avant vers la gauche, le pivotement retardé du phare RHL vers la gauche continue tant qu'il est nécessaire pour combler l'écart entre la position allumée d'extrémité droite et l'extrémité droite de zone (XR) ; et
- le commencement du pivotement vers la droite du phare RHL n'est pas retardé et a lieu dès que la zone d'extrémité droite (XR) atteint la position allumée d'extrémité droite ; et/ou
(ii) lorsque l'extrémité gauche de zone se déplace vers la gauche :
- dans le cas où l'extrémité gauche de zone (XL) s'est déplacée juste avant vers la droite, le pivotement retardé du phare LHL vers la droite continue tant qu'il est nécessaire pour combler l'écart entre la position allumée d'extrémité gauche et l'extrémité gauche de zone (XL) ; et
- le commencement du pivotement vers la gauche du phare LHL n'est pas retardé et a lieu dès que la zone d'extrémité gauche atteint la position allumée d'extrémité gauche.

2. Dispositif selon l'une quelconque des revendications précédentes, dans lequel l'extrémité gauche de zone (XL) est une position du phare gauche du véhicule avant, et l'extrémité droite de zone (XR) est une position du phare droit du véhicule avant.

3. Dispositif selon l'une quelconque des revendications précédentes, comprenant en outre :
un dispositif de commande de réglage d'inclinaison (104) conçu pour commander le réglage d'inclinaison du phare de véhicule.

4. Dispositif selon l'une quelconque des revendications précédentes, dans lequel le dispositif de commande de temporisation (105) est conçu pour commander une temporisation de pivotement du dispositif de commande de pivotement (104) en délivrant un signal de commande au dispositif de commande de pivotement, dans lequel un niveau de signal du signal de commande est modifié en fonction de la variation de la zone de présence de véhicule.

5. Dispositif selon l'une quelconque des revendications précédentes, dans lequel :
le détecteur de zone de présence de véhicule (101) est conçu pour obtenir une image d'une région avant capturée par un dispositif de prise de vues et pour déterminer la zone de présence de véhicule sur la base de phares du véhicule avant sur l'image capturée.
